# EUROPEAN PATENT APPLICATION

(11) **EP 4 458 766 A1**
(43) Date of publication of application: **06.11.2024**
(21) Application number: 22916590.7
(22) Date of filing: 21.12.2022
(51) Int. Cl.: C01B 33/037, H01M 4/38, H01M 4/134, H01M 10/052, B02C 17/20

(54) **SILICON NANOPARTICLES FOR SECONDARY BATTERY ANODE ACTIVE MATERIAL AND MANUFACTURING METHOD THEREFOR**

(30) Priority: 30.12.2021 KR 20210192783
(71) Applicant: OCI Company Ltd., Seoul 04532 (KR)
(72) Inventor: NOH, Minho, Seongnam-si Gyeonggi-do 13212 (KR); OH, Minkyung, Seongnam-si Gyeonggi-do 13212 (KR); CHANG, Joonhyun, Seongnam-si Gyeonggi-do 13212 (KR); CHI, Eunok, Seongnam-si Gyeonggi-do 13212 (KR)
(74) Representative: HGF
(86) International application number: PCT/KR2022/020928
(87) International publication number: WO 2023/128448

(57) **Abstract**

The present invention relates to a method for efficiently producing silicon nanoparticles having a controlled particle size, with a minimal content of impurities such as metal and oxygen. Specifically, the present invention may provide a method for producing silicon nanoparticles, wherein polysilicon fine powder is used as a raw material, whereby the silicon nanoparticles have particle sizes of 80nm<D₅₀<150nm and 100nm<D₉₀<250nm, a total metal impurity content of 200 ppm or less, and a total oxygen content of 10.0% or less.

## Description

### FIELD

The present disclosure relates to silicon nanoparticles for an anode active material for a secondary battery that may improve initial discharge capacity (IDC), initial efficiency (ICE) and life characteristics of the secondary battery, and a method for preparing the same.

### DESCRIPTION OF RELATED ART

Performance improvement of secondary batteries is based on components of a cathodematerial, an anode material, and electrolyte.

Among the above components, a graphite-based material which is mainly used as an anode active material of the anode material is commercially available due to excellent electrochemical performance and low cost thereof. However, theoretical capacity thereof is limited to 370 mAh/g, and thus cannot be applied to high-capacity secondary batteries.

In order to overcome the above limitation, a non-graphite anode material such as silicon, tin, and germanium is emerging as an alternative material thereto. Among them, silicon has high theoretical capacity of 4000 to 4200 mAh/g which is almost 10 times or greater of that of graphite and thus is attracting attention as a material to replace graphite. However, although silicon has the high theoretical capacity, a large volume expansion of approximately 400% thereof occurs during the charging and discharging process, resulting in structural destruction of the silicon and short cycle lifethereof.

As a scheme of alleviating the volume expansion of silicon, a scheme of preparing a composite material by mixing carbon material with silicon has been developed, and silicon nanoparticles are used as a silicon material.

In order to exhibit excellent quality as an anode active material so as to improve battery performance when being applied to secondary batteries, the silicon nanoparticles need to have low content of the impurities such as metal and oxygen while controlling their particle size.

For this purpose, various silicon raw materials have been used to prepare silicon nanoparticles. However, problems still exist, such as the low purity of the silicon raw materials themselves, high raw material and processing costs, and the easy introduction of impurities during processing.

Specifically, when metal silicon (MG-Si) is used as the silicon raw material, the impurity content is high, and it is difficult to significantly reduce the impurity content even through a pulverizing process. Therefore, when the metal silicon is converted into nanoparticles which in turn are applied to the secondary battery, there is a problem that side reactions may occur during charging and discharging of the battery, which ultimately has a negative effect on battery performance.

Furthermore, when silicon kerf (Si kerf) produced when cutting a silicon ingot is used as the silicon raw material, the silicon raw material itself may have high purity. However, there is also a disadvantage in the process that it is easily contaminated with lubricants and water used during the cutting process. The silicon that comes into contact with water oxidizes. Thus, when the oxidized silicon is used as the raw material, the content of oxygen and impurities increases. Thus, when it is applied to the secondary battery, battery performance may decrease.

Furthermore, when using polysilicon chunks or chips, the initial particle size thereof is too large. Thus, the number of pulverizing steps increases, increasing pulverizing time and cost. Furthermore, since it is more expensive than other raw materials, it has the disadvantage of being inefficient and not suitable for mass production.

Therefore, it is necessary to solve the above problems and thus develop a method that may efficiently prepare and produce silicon nanoparticles with controlled particle sizes while minimizing the content of impurities such as metal and oxygen.

### DISCLOSURE

### TECHNICAL PURPOSE

A purpose of the present disclosure is to provide an efficient preparation method of silicon nanoparticles with controlled particle size while minimizing impurity content such as metal and oxygen.

Another purpose of the present disclosure is to provide silicon nanoparticles for an anode active material for the secondary battery as prepared by the above preparing method, the anode active material for the secondary battery including the silicon nanoparticles so as to improve the initial discharge capacity, initial efficiency and life characteristics of the secondary battery, an anode material for the secondary battery including the same, and a secondary battery including the anode material.

The purposes of the present disclosure are not limited to the purposes mentioned above, and other purposes and advantages of the present disclosure as not mentioned may be understood based on descriptions as set forth below, and will be more clearly understood based on embodiments of the present disclosure. Furthermore, it will be readily apparent that the purposes and advantages of the present disclosure may be realized by solutions and combinations thereof indicated in the claims.

### TECHNICAL SOLUTION

In accordance with one aspect of the present disclosure, provided is a method for preparing silicon nanoparticles, the method comprising: dry-pulverizing polysilicon fine powders; and wet-pulverizing the dry-pulverized polysilicon fine powders to prepare the silicon nanoparticles; wherein each of the polysilicon fine powders has a particle size of 0.2mm<D₅₀<0.4mm and 0.5mm<D₉₀<1mm, and a total metal impurity content of 500 ppm or smaller, wherein each of the silicon nanoparticles has a particle size of 80nm<D₅₀<150nm and 100nm<D₉₀<250nm and a total metal impurity content of 200 ppm or smaller.

In accordance with another aspect of the present disclosure, provided are silicon nanoparticles, wherein each of the silicon nanoparticles has a particle size of 80nm<D₅₀<150nm and 100nm<D₉₀<250nm and a total metal impurity content of 200 ppm or smaller, wherein a total oxygen content of the silicon nanoparticle is 10.0% or smaller.

In accordance with still another aspect of the present disclosure, provided are an anode material for a secondary battery comprising an anodeactive material for a secondary battery comprising the silicon nanoparticles of the present disclosure, and a secondary battery comprising an anode active material for a secondary battery comprising the silicon nanoparticles of the present disclosure.

### TECHNICAL EFFECT

According to the method for preparing the silicon nanoparticles according to the present disclosure, the polysilicon powder which has a relatively low raw material price and low metal impurity content is used as the raw material. Thus, the process cost may be reduced, and the silicon nanoparticles may be prepared efficiently.

According to the method for preparing the silicon nanoparticles according to the present disclosure, the high-purity and high-quality silicon nanoparticles with a particle size of 80nm<D₅₀<150nm and 100nm<D₉₀<250nm, a total metal impurity content of 200 ppm or lower, and a total oxygen content of 10.0% or lower may be prepared.

Applying the silicon nanoparticles as prepared according to the method for preparing the silicon nanoparticles according to the present disclosure to the anode active material for the secondary battery may allow the initial discharge capacity, initial efficiency and life characteristics of the secondary battery to be improved.

In addition to the above-mentioned effects, the specific effects of the present disclosure are described below along with the descriptions of the specific details for carrying out the present disclosure.

### BRIEF DESCRIPTION OF DRAWINGS

FIG. 1 shows a graph plotting the initial charging efficiency (ICE; Initial coulombic efficiency; discharge amount relative to initial charge amount) and initial discharge capacity of a half-cell test using silicon nanoparticles according to each of Present Example 1, and Comparative Examples 1 and 2 of the present disclosure.
FIG. 2 shows a graph of a capacity retention rate of a half-cell test using silicon nanoparticles according to each of Present Example 1 and Comparative Example 1 and 2 of the present disclosure.

### DETAILED DESCRIPTIONS

The above-described purposes, features and advantages are described in detail below with reference to the drawings and embodiments, so that those skilled in the art in the technical field to which the present disclosure pertains may easily implement the technical ideas of the present disclosure. When describing the present disclosure, when it is determined that a detailed description of the known element or step related to the present disclosure may unnecessarily obscure the gist of the present disclosure, the detailed description thereof is omitted. Hereinafter, a preferred embodiment according to the present disclosure will be described in detail with reference to the attached drawings. In the drawings, identical reference numerals are used to indicate identical or similar components.

The description of those that may be sufficiently inferred technically by a person skilled in the art among the contents not described in the present disclosure will be omitted.

In the present disclosure, "metal of metal impurities" refers to metal elements that affect quality when silicon nanoparticles are applied to the anode active material of secondary batteries, and may refer to 24 types of metal elements from Al to Zn described typically in Tables 2 and 3 in the present disclosure. However, the present disclosure is not necessarily limited thereto.

It will also be understood that when a first element or layer is referred to as being present "on" a second element or layer, the first element may be disposed directly on the second element or may be disposed indirectly on the second element with a third element or layer being disposed between the first and second elements or layers. It will also be understood that when a first element or layer is referred to as being present "under" a second element or layer, the first element may be disposed directly under the second element or may be disposed indirectly under the second element with a third element or layer being disposed between the first and second elements or layers.

It will be understood that when an element or layer is referred to as being "connected to", or "coupled to" another element or layer, it may be directly connected to or coupled to another element or layer, or one or more intervening elements or layers therebetween may be present. In addition, it will also be understood that when an element or layer is referred to as being "between" two elements or layers, it may be the only element or layer between the two elements or layers, or one or more intervening elements or layers therebetween may also be present.

In the present disclosure, "<X" means smaller than X and "≤X" means smaller than or equal to X. In the present disclosure, ">X" means larger than X and "≥X" means larger than or equal to X.

In the present disclosure, a size of balls and beads may refer to "diameter."

Hereinafter, the method for preparing silicon nanoparticles according to the present disclosure will be described in detail.

According to the present disclosure, polysilicon fine powders are used as a raw material for silicon nanoparticles. The polysilicon fine powder is a raw material with relatively low demand, and thus, its price is low, and its impurity content is very low. Thus, when the polysilicon fine powder is used as an active material for a secondary battery, the performance of the secondary battery is improved.

Specifically, according to the present disclosure, each of the polysilicon fine powders has a particle size of 0.2mm<D₅₀<0.4mm and 0.5mm<D₉₀<1mm, and a total metal impurity content of 500 ppm or smaller. By pulverizing the polysilicon fine raw materials, the silicon nanoparticles having a particle size of preferably 80nm<D₅₀<150nm and 100nm<D₉₀<250nm, more preferably 100 nm<D50<120 nm and 120 nm<D90<200 nm and a total metal impurity content of 200 ppm or smaller may be prepared.

Pulverizing the polysilicon fine powders may be divided into dry-pulverizing and wet-pulverizing. As the pulverizing progresses, the size of silicon particles should gradually become smaller. An apparatus that performs pulverizing is not particularly limited as long as the apparatus may be used in the art.

For example, the dry-pulverizing may be performed in one apparatus selected from the group consisting of a ball mill apparatus, a jet mill apparatus, and a disk mill apparatus. Preferably, it may be performed in a ball mill apparatus.

When the dry-pulverizing is performed in the ball mill apparatus, the balls of the ball mill may be selected to have a size of approximately 10 to 50 mm. More preferably, the ball with a size of 10 to 30 mm may be selected. More preferably, the ball with a size of 20 to 25 mm may be selected.

Furthermore, when selecting the ball mill apparatus in the dry-pulverizing, the material of the ball used is not particularly limited. Examples thereof may include ceramic material, metal material, ceramic-metal mixed material, etc. However, it is preferable not to use the material containing the metal impurities listed in Tables 2 and 3 of the present disclosure as main components. Furthermore, the material of the ball may have characteristics such as hardness and density that may exhibit excellent pulverizing performance in the pulverizing process. In a specific example, a zirconia ball containing zirconium (Zr) may be used.

The wet-pulverizing may be carried out in two stages: first wet-pulverizing and second wet-pulverizing. For example, wet-pulverizing may be performed in a bead mill apparatus. The first wet-pulverizing and then the second wet-pulverizing may be performed such that the particle size of silicon nanoparticles may be adjusted to satisfy 80nm<D₅₀<150nm and 100nm<D₉₀<250nm.

For example, both the first wet-pulverizing and the second wet-pulverizing may be performed in the bead mill apparatus. At this time, the average size of the second bead as the bead used in the second wet-pulverizing may be smaller than the average size of the first bead as the bead used in the first wet-pulverizing.

Specifically, the average size of the first bead may be, for example, in a range of 0.2 to 5 mm. For example, it may be in a range of 0.3 to 1 mm, or may be in a range of 0.3 to 0.5 mm. The average size of the second bead may be, for example, in a range of 0.05 to 0.5 mm. For example, it may be in a range of 0.1 to 0.3 mm, or 0.1 to 0.2 mm. However, the present disclosure is not limited thereto, and the average size of the first bead should be selected to be larger than the average size of the second bead.

Furthermore, when selecting the bead mill apparatus in the wet-pulverizing, the material of the beads used is not particularly limited, and may include ceramic material, metal material, or ceramic-metal mixed material. It is preferable not to use the material containing the metal impurities as listed in Tables 2 and 3 in the present disclosure as the main components. Furthermore, the material of the bead may have characteristics such as hardness and density that may exhibit excellent pulverizing performance in the pulverizing process. In a specific example, a zirconia bead containing zirconium (Zr) may be used.

When performing the wet-pulverizing in this manner, a solvent is used. In this case, an alcohol-based solvent may be used. For example, alcohol-based solvents such as ethanol, propanol, and methanol may be used.

Furthermore, in order to increase the dispersion of silicon and prevent oxidation of silicon, an additive may be used together with the solvent in the wet-pulverizing. For example, stearic acid may be used as the additive. Preferably, the stearic acid as an additive may be dissolved in a solvent before starting the wet-pulverizing, and then may be mixed with silicon and stirred to increase the dispersion of the silicon particles.

As the wet or dry-pulverizing is performed, it is common for contamination to occur due to materials such as lubricants used in the cutting apparatus and the solvent such as water used in the wet-pulverizing. Thus, the impurity content may become higher, and in particular, the oxygen content may increase due to silicon oxidation.

When, in this way, the oxygen content in the silicon nanoparticles increases, this may cause a decrease in the performance of the secondary battery when the silicon nanoparticles are applied as the anode active material for the secondary battery. Therefore, it is important to control the total oxygen content of silicon nanoparticles to be low. This is a characteristic separate from the impurity metal content, and should be separately satisfied regardless of the size control of the silicon nanoparticles in order to produce high-quality and high-purity silicon nanoparticles. Therefore, it is desirable that the total oxygen content of the final prepared silicon nanoparticles is 10.0% or smaller.

In this way, the silicon nanoparticles prepared according to the method for preparing silicon nanoparticles in accordance with the present disclosure have high purity and precisely controlled particle size. Thus, the silicon nanoparticles may improve the initial discharge capacity, initial efficiency, and cycle life characteristics when being applied to secondary batteries.

### Examples

Hereinafter, the present disclosure is described in more detail based on examples and experimental examples. However, the following example and experimental example only illustrate the present disclosure, and the content of the present disclosure is not limited to the following example and experimental example. Thus, the following example should not be interpreted as limiting the present disclosure in any way.

### 1. Preparing silicon nanoparticles

Present Example 1 used polysilicon powders (OCI, ST900) as a raw material, Comparative Example 1 used metal silicon (MG-Si) as a raw material, and Comparative Example 2 used silicon kerf (Si kerf) as a raw material. The dry-pulverizing was performed in the ball mill apparatus using the zirconia balls, and the wet-pulverizing was performed in the bead mill apparatus using the zirconia beads to prepare the silicon nanoparticles.

An initial particle size and a final particle size of the raw material, and pulverizing conditions (the size of the ball or the bead and the pulverizing time) in each of Present Example 1, Comparative Example 1, and Comparative Example 2 are as shown in Table 1 below.

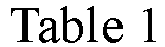

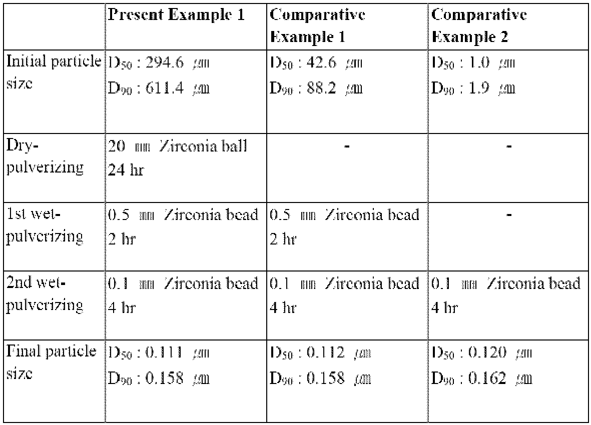

As shown in Table 1, for the same comparison of experiments, the final particle sizes after the pulverizing were adjusted to have a value as similar as possible. Because the initial particle sizes of the raw materials were different from each other, the pulverizing process was carried out differently.

In the wet-pulverizing step, 400 parts by weight (2400 g) of ethanol and 20 parts by weight (120 g) of stearic acid were mixed with 100 parts by weight (600 g) of the raw materials.

The metal content of the silicon raw material (before pulverizing) of each of Present Example 1 and Comparative Examples 1 to 2 is indicated in Table 2 below, and the content of metal impurities and the oxygen content of silicon nanoparticles (after pulverizing; slurry state) of each of Present Example 1 and Comparative Examples 1 to 2 are indicated in Table 3 below. In this regard, the content of metal impurities was measured with 'iCAP 7600' equipment from Thermo Fisher, and the content of oxygen was measured with 'ONH836' equipment from LECO.

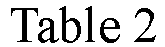

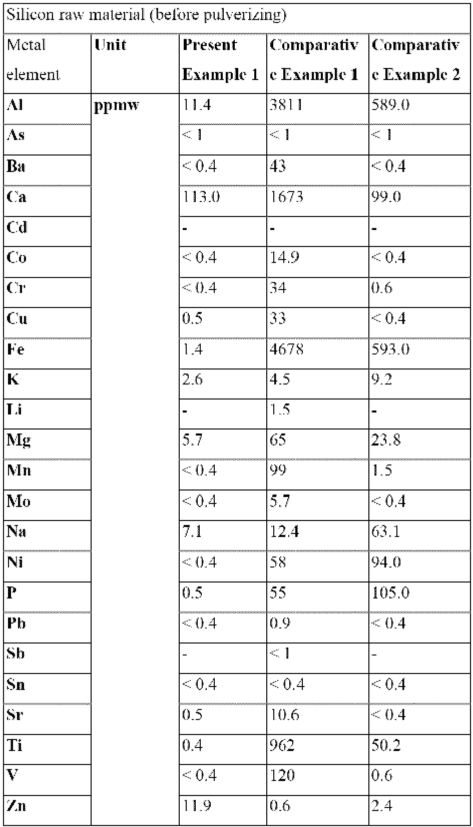

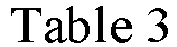

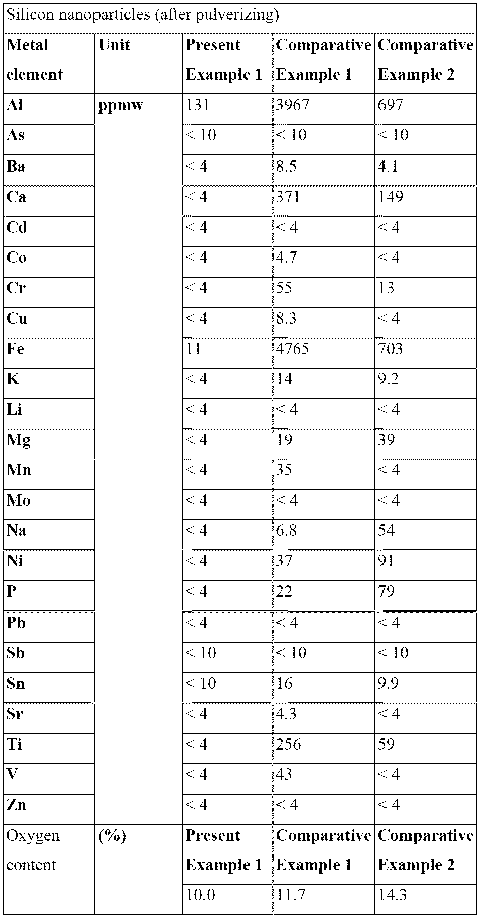

As may be seen in Tables 2 and 3, the silicon nanoparticles of Present Example 1 had a significantly lower content of impurity metal elements compared to the silicon nanoparticles of Comparative Examples 1 and 2.

Furthermore, even though the wet-pulverizing was performed twice in Present Example 1, Present Example 1 had lower oxygen content than that in each of Comparative Examples 1 and 2 in which the wet-pulverizing was performed once or twice. The total oxygen content of Present Example 1 satisfied the target range of 10% or smaller.

### 2. Half-Cell Test

### (1) Preparing silicon-carbon composite

A silicon-carbon composite was prepared using the silicon nanoparticle slurry as prepared in each of Present Example 1, Comparative Example 1, and Comparative Example 2, and a pitch (high softening point pitch : HSPP with a softening point of 240°C; OCI company). A specific preparation method is as follows.

4.5 g of the pitch was completely dissolved in 200 ml of THF (tetrahydrofuran) to produce a pitch solution. Then, 40 g of the pulverized silicon nanoparticle slurry was added to the pitch solution which in turn was stirred for 1 hour or greater, and then was dried using an evaporator, and the resulting dried powders were placed in a muffle furnace and were heat-treated therein at 1000°C under a nitrogen gas atmosphere to prepare the silicon-carbon composite.

### (2) Manufacturing half cell

To analyze the electrochemical properties of the anode material for the secondary battery, an anode plate was manufactured using mixtures powders of 10% by weight of the silicon-carbon composite and 90% by weight of artificial graphite as the anode active material. The anode plate was manufactured by casting the slurry in which the active material, a conductive material (Imerys Graphite & Carbon company, Super-P), and a binder were mixed each other at a weight ratio of 94:1:5 onto a copper foil. At this time, the binder was prepared by mixing CMC and SBR at a weight ratio of 3:7. The manufactured anodeplate together with a lithium metal as a counter electrode were used to manufacture a coin cell. Then, electrochemical performance of a half cell thereof was measured.

### (3) Half-cell test measurement method and conditions

The charging and discharging conditions were as follows: charging CC/CV: 0.01V/0.01C, and discharging CC 1.5V, and the rate was 0.2C.

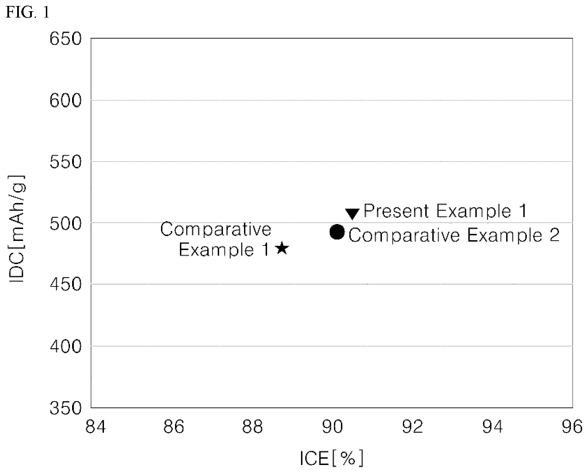

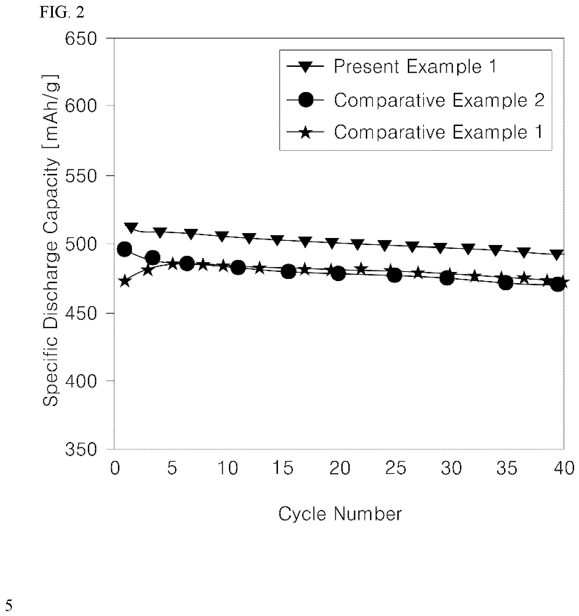

Using a half-cell device TOSCAT-3100, each of initial charging efficiency (Initial coulombic efficiency (ICE)); discharge amount relative to initial charge amount), initial charging capacity (ICC), and initial discharge capacity (IDC) was measured. The measurement results are shown in Table 4 below. A graph plotting each of ICE and IDC is shown in FIG. 1. Furthermore, the cycle life was measured at 40 cycles, and a graph regarding the capacity retention rate is shown in FIG. 2 (horizontal axis: number of cycles, and vertical axis: specific discharge capacity).

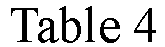

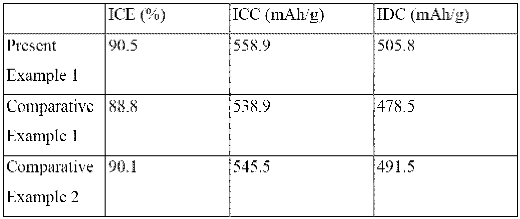

As may be seen from Table 4, FIG. 1, and FIG. 2, when the silicon nanoparticles of Present Example 1 are applied, all of the initial charging capacity (ICC), the initial discharge capacity (IDC) and the initial efficiency (ICE) were excellent compared to Comparative Examples 1 and 2 in which the raw materials were MG-Si and Si kerf, respectively. Furthermore, the capacity retention rate of Present Example 1 was found to be improved.

The present disclosure has been described above with reference to illustrative drawings. However, the present disclosure is not limited to the embodiments and drawings disclosed in the present disclosure. It is obvious that various modifications may be made thereto by those skilled in the art within the scope of the technical idea of the present disclosure. In addition, even when the effect of the configuration of the present disclosure was not explicitly described while describing the embodiment of the present disclosure, it is natural that the predictable effect from the configuration should be recognized.

## Claims

1. A method for preparing silicon nanoparticles, the method comprising:
dry-pulverizing polysilicon fine powders; and
wet-pulverizing the dry-pulverized polysilicon fine powders to prepare the silicon nanoparticles;
wherein each of the polysilicon fine powders has a particle size of 0.2mm<D₅₀<0.4mm and 0.5mm<D₉₀<1mm, and a total metal impurity content of 500 ppm or smaller,
wherein each of the silicon nanoparticles has a particle size of 80nm<D₅₀<150nm and 100nm<D₉₀<250nm and a total metal impurity content of 200 ppm or smaller.

2. The method of claim 1, wherein a total oxygen content of the silicon nanoparticles is 10.0% or smaller.

3. The method of claim 1, wherein the dry-pulverizing is performed in one selected from a group consisting of a ball mill apparatus, a jet mill apparatus, and a disk mill apparatus.

4. The method of claim 1, wherein the wet-pulverizing includes first wet-pulverizing and second wet-pulverizing and is performed in a bead mill apparatus,
wherein the first wet-pulverizing and the second wet-pulverizing are respectively performed using a first bead and a second bead of different sizes, and an average size of the second bead is smaller than an average size of the first bead.

5. The method of claim 1, wherein the wet-pulverizing includes adding an alcohol-based solvent.

6. The method of claim 5, wherein the wet-pulverizing includes adding stearic acid to the alcohol-based solvent.

7. Silicon nanoparticles prepared according to the method for preparing silicon nanoparticles of one of claims 1 to 6.

8. An anode active material for a secondary battery comprising the silicon nanoparticles according to claim 7.

9. An anode material for a secondary battery comprising an anode active material for a secondary battery comprising the silicon nanoparticles according to claim 7.

10. A secondary battery comprising an anode active material for a secondary battery comprising the silicon nanoparticles according to claim 7.
